# EUROPÄISCHE PATENTSCHRIFT

(11) **EP 2 325 071 B1**
(45) Veröffentlichungstag und Bekanntmachung des Hinweises auf die Patenterteilung: **04.03.2015**
(21) Anmeldenummer: 10450177.0
(22) Anmeldetag: 18.11.2010
(51) Int. Cl.: B62H 3/08, B62M 6/80, B60L 11/18

(54) **Anordnung zum Laden der Batterie von Elektrofahrrädern**
Assembly for charging the battery on electric bikes
Agencement de chargement de la batterie de vélos électriques

(30) Priorität: 19.11.2009 AT 18312009
(43) Veröffentlichungstag der Anmeldung: 25.05.2011
(73) Patentinhaber: Schweiger, Martin Karl, 4817 St. Konrad (AT)
(72) Erfinder: Schweiger, Martin Karl, 4817 St. Konrad (AT)
(74) Vertreter: Rippel, Andreas

(56) Entgegenhaltungen:
- WO-A2-98/09254
- CN-A- 101 284 523
- CN-Y- 201 313 593
- JP-A- 10 075 535
- SE-A- 8 206 908
- US-A1- 2007 220 933

## Beschreibung

Die Erfindung bezieht sich auf eine Anordnung zum Laden der Batterie von Elektrofahrrädem und dergleichen einspurigen Elektrofahrzeugen, mit einem stationären Ladegerät, dessen an einem Halter angeordnete Ladekontakte mit Kontaktelementen am Elektrofahrzeug elektrisch zu verbinden sind, wobei die Kontaktelemente an der Nabe eines Rades des Elektrofahrzeuges und die Ladekontakte im Halter am Grund von zum Einlegen der Enden einer Nabe ausgebildeten Vertiefungen angeordnet sind.

Das Laden der Batterien von Elektrofahrzeugen erfolgt oft dadurch, dass das Ladegerät über ein Kabel mit der Batterie verbunden wird. Dies erfordert einerseits eine oft nicht erwünschte manuelle Tätigkeit, andererseits kann sehr leicht auf das Laden der Batterie vergessen werden.

In der EP 2 168 848 A1 ist eine Anordnung der eingangs genannten Art beschrieben. Gemäß der dort beschriebenen Einrichtung wird die verlängerte Radnabe in eine Mulde gelegt und so bloß durch die Schwerkraft eine elektrische Verbindung hergestellt. Ein derartiger Kontakt ist äußerst unzuverlässig, insbesondere kann die Mulde oder auch die verlängerte Nabe verschmutzt sein und dieser Schmutz kann bloß durch die Schwerkraft nicht immer verdrängt werden, um die elektrische Verbindung herzustellen.

Das Dokument WO 98/09254 A2 offenbart eine Anordnung gemäß dem Oberbegriff des Anspruchs 1.

Die Erfindung hat es sich zum Ziel gesetzt eine Anordnung zu schaffen, mit der das Laden der Batterie beim Abstellen des Elektrofahrzeuges sicherer erfolgt.

Erreicht wird dies bei einer Anordnung der eingangs genannten Art dadurch, dass die Ladekontakte als federnde Kontakte ausgebildet sind. Durch die Federkraft wird die elektrische Verbindung weitaus sicherer hergestellt als bei der bekannten Einrichtung.

Federbelastete Kontakte sind an sich bekannt. So wird in der Druckschrift CN000201227988Y eine Anordnung gezeigt, bei der die Ladung der Batterie über einen federbelasteten Hebel erfolgt. Eine derartige Anordnung ist äußerst störungsanfällig und in der Praxis kaum brauchbar.

Bei einer erfindungsgemäßen Anordnung wird beim Einschieben oder Einstellen des Elektrofahrrades in den Halter automatisch ein Laden der Batterie ermöglicht. Ein solches Laden kann allerdings z.B. von der Bezahlung, Bar oder durch Kreditkarten, oder bei bekannten Geldautomaten, abhängig gemacht werden.

Bei einer erfindungsgemäßen Anordnung ist es möglich, dass in den Vertiefungen Schwenkkörper oder Schiebekörper angeordnet sind und im Wege der Schiebe- oder Schwenkbewegung dieser Körper ein die Stromzuführung vom Ladegerät schaltender Schalter angeordnet ist. Bei einer solchen Anordnung werden die Ladekontakte nur dann mit Strom versorgt, wenn sich ein Elektrofahrrad im Halter befindet.

Im Rahmen der Erfindung ist es aber auch möglich, dass die Ladekontakte als annähernd U-förmige Federn zur Aufnahme der Kontaktelemente ausgebildet sind.

Es wird auch eine erfindungsgemäße Anordnung vorgeschlagen, bei der der Halter entgegen der Kraft von Federn verschiebbar gelagert ist und im Wege der Schiebebewegung ein die Stromzuführung vom Ladegerät schaltender Schalter angeordnet ist. Bei dieser Anordnung wird demnach die Verschiebung der Ladekontakte durch Verschiebung des gesamten Halters erreicht.

Nachstehend ist die Erfindung anhand von einigen in den Zeichnungen dargestellten Ausführungsbeispielen näher beschrieben, ohne auf diese Beispiele beschränkt zu sein. Dabei zeigen:
- Die Fig. 1 bis 3: und die Fig. 10 bis 12 in schaubildlicher Ansicht, in Seitenansicht und im Schnitt zwei nicht erfindungsgemäß ausgebildete Halter;
- die Fig. 4 bis 6: in ähnlicher Darstellungsweise eine Ausführungsform eines erfindungsgemäß ausgestalteten Halters;
- die Fig. 7 bis 9: und die Fig. 13 bis 15 jeweils weitere Ausführungsformen von erfindungsgemäß ausgebildeten Haltern, wobei die Darstellungsweise den vorstehend beschriebenen Figuren entspricht.

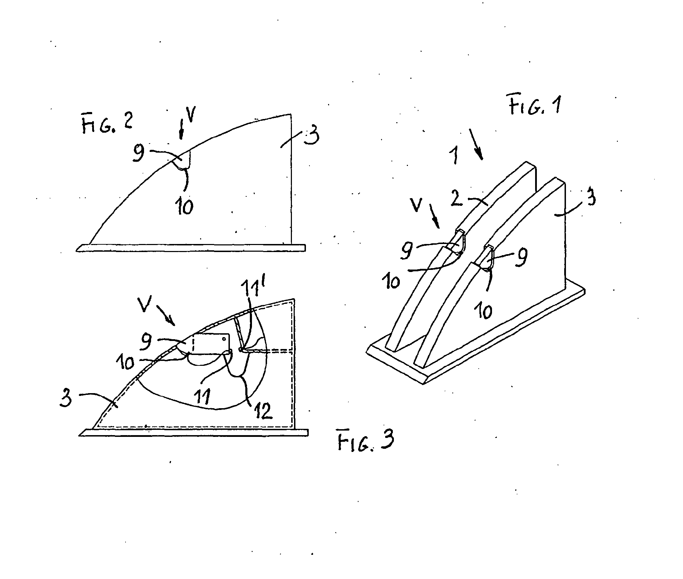

Bei den Ausführungsformen nach den Figuren 1 bis 15 ist jeweils ein Halter 1 vorgesehen, der zwei im Abstand etwa einer Radbreite voneinander stehende Platten 2 und 3 aufweist. Zwischen die Platten 2 und 3 ist das Rad eines Elektrofahrrades einschiebbar, das dadurch gehalten wird.

Das Rad mit seiner Nabe ist aus Gründen der Übersichtlichkeit in den Zeichnungen nicht dargestellt.

Gemäß den Fig. 1 bis 3 sind in den Platten 2, 3 Vertiefungen V angeordnet, in denen Schwenkkörper 9 schwenkbar gelagert sind. Am Grund der Vertiefung V sind Ladekontakte 10 angeordnet.

An den Schwenkkörpern 9 sind Kontakte 11 eines die Stromzuführung vom Ladegerät schaltenden Schalters vorgesehen. Eine Feder 12 drängt den Schwenkkörper 9 nach außen.

In die Vertiefungen V werden die verlängerten, mit den Kontaktelementen versehenen Naben eines Rades eingesetzt. Der Schwenkkörper 9 wird dadurch entgegen der Kraft der Feder 12 verschwenkt, wobei der Kontakt 11 durch Berührung mit seinem Gegenkontakt 11' die Stromzuführung vom Ladegerät schließt.

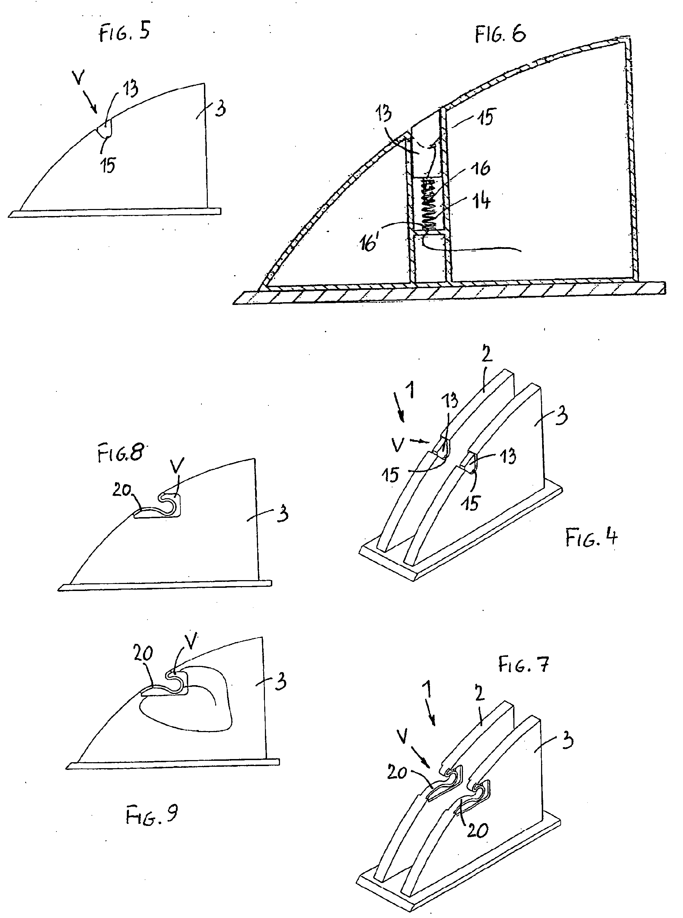

Auch bei der Ausführungsform nach den Figuren 4 bis 6 ist eine Vertiefung V in den Platten 2 und 3 vorgesehen, in welche die verlängerte Nabe, welche mit den Kontaktelementen versehen ist, eingelegt wird. Zur Erhöhung der Übersichtlichkeit ist die Fig. 6 in einem größeren Maßstab dargestellt.

Ein Schiebekörper 13 ist entgegen der Kraft einer Feder 14 nach unten verschiebbar. Am Grund der Vertiefung ist der Ladekontakt 15 angeordnet, der elektrisch mit einem an einem Fortsatz des Schiebekörpers 13 vorgesehenen Kontakt 16 verbunden ist.

Beim Einsetzen der verlängerten Nabe in die Vertiefung V wird der Schiebekörper 13 nach unten verschoben und der Kontakt 16 kommt zur Anlage an seinem Gegenkontakt 16', wodurch die Verbindung mit dem Ladegerät hergestellt ist.

Bei der Ausführungsform nach den Figuren 7 bis 9 sind die Ladekontakte 20 als annähernd U-förmige Federn ausgebildet, wobei in das "U" die mit den Kontaktelemehten versehene Nabe eines Rades eingeschoben werden kann. Die Federn 20 sind in Vertiefungen V der Platten 2, 3 eingesetzt.

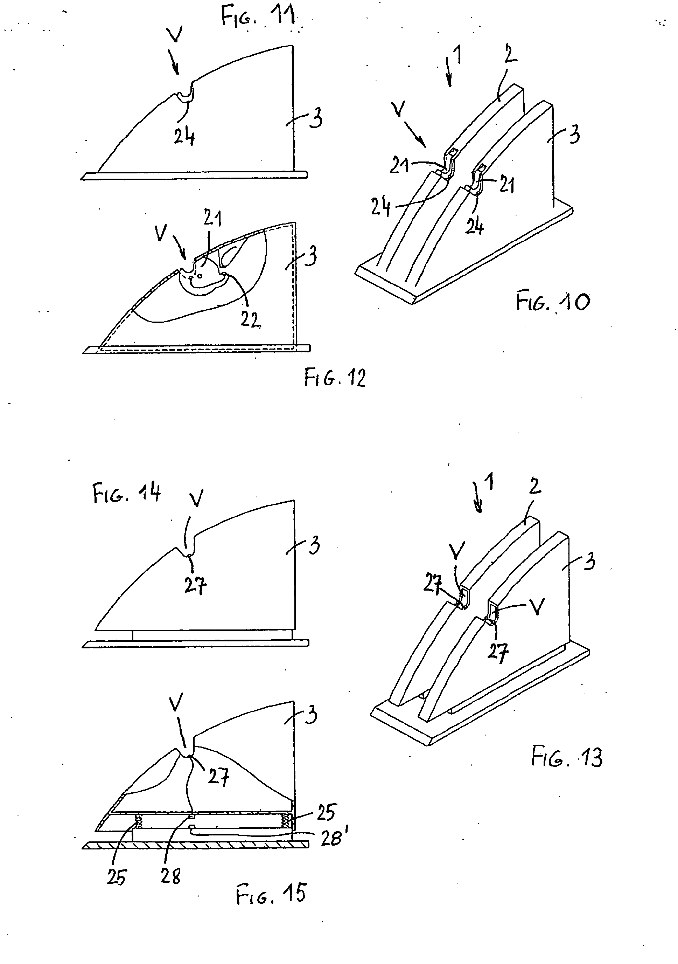

Die nicht beanspruchte Variante nach den Figuren 10 bis 12 ähnelt der Ausführungsform nach den Figuren 1 bis 3. Auch hier ist ein Schwenkkörper 21 vorgesehen, der über einen Kontakt 22 beim Einlegen der Nabe des Rades in die Vertiefung V der Platten 2 und 3 die Stromzuführung vom Ladegerät zum Ladekontakt 24 in der Vertiefung V schließt.

Bei der Variante nach den Figuren 13 bis 15 ist der gesamte Halter entgegen der Kraft von Federn 25 nach unten verschiebbar. Der in einer Vertiefung V angeordnete Ladekontakt 27 erhält beim Einlegen der Nabe eines Rades in die Vertiefung V und dem daraus erfolgten Absenken der Platten 2 und 3 des Halters 1 über einen Kontakt 28, der dann mit seinem Gegenkontakt 28' in Berührung ist, Strom vom Ladegerät.

Im Rahmen der Erfindung sind zahlreiche Abänderungen möglich. So kann das Ladegerät im Halter eingebaut sein oder auch extern angeschlossen werden. Die Anordnung kann auch mit zusätzlichem Einschaltknopf, Ladelampen, einer Zeituhr oder einer automatischen Ausschaltung ausgerüstet sein. Die Halter können auch in Serie für mehrere Räder ausgebildet sein, z.B. durch Module, die man aneinander immer wieder anstecken kann.

## Patentansprüche

1. Anordnung zum Laden der Batterie von Elektrofahrrädern und dergleichen einspurigen Elektrofahrzeugen, mit einem stationären Ladegerät, dessen an einem Halter (1) angeordnete Ladekontakte (15, 20, 27) mit Kontaktelementen am Elektrofahrzeug elektrisch zu verbinden sind, **dadurch gekennzeichnet, dass** die Kontaktelemente an der Nabe eines Rades des Elektrofahrzeuges und die Ladekontakte (15, 20, 27) im Halter (1) am Grund von zum Einlegen der Enden einer Nabe ausgebildeten Vertiefungen (V) angeordnet sind, wobei die Ladekontakte (15, 20, 27) als federnde Kontakte ausgebildet sind.

2. Anordnung nach Anspruch 1, **dadurch gekennzeichnet, dass** in den Vertiefungen (V) Schwenkkörper oder Schiebekörper (13) angeordnet sind und im Wege der Schiebe- oder Schwenkbewegung dieser Körper (13) ein die Stromzuführung vom Ladegerät schaltender Schalter (16, 16') angeordnet ist.

3. Anordnung nach Anspruch 1, **dadurch gekennzeichnet, dass** die Ladekontakte als annähernd U-förmige Federn (20) zur Aufnahme der Kontaktelemente ausgebildet sind.

4. Anordnung nach Anspruch 1, **dadurch gekennzeichnet, dass** der Halter (1) entgegen der Kraft von Federn (25) verschiebbar gelagert ist und im Wege der Schiebebewegung ein die Stromzuführung vom Ladegerät schaltender Schalter (28, 28') angeordnet ist.

## Claims

1. A device for charging the battery of electric bicycles and similar electric vehicles, with a stationary charging device, whose charging contacts (15, 20, 27) situated on a holder (1) are to be electrically connected with contact elements on the electric vehicle, **characterized in that** the contact elements are arranged on the hub of a wheel of the electric vehicle, and the charging contacts (15, 20, 27) are arranged in the holder (1) at the base of depressions (V) formed to accommodate the ends of a hub, wherein the charging contacts (15, 20, 27) are designed as flexible contacts.

2. The device according to claim 1, **characterized in that** pivoting bodies or sliding bodies (13) are situated in the depressions (V), and that a switch (16, 16') that switches the power feed from the charging device is located in the sliding or swiveling motion path of these bodies (13).

3. The device according to claim 1, **characterized in that** the charging contacts are designed approximately like U-shaped springs (20) for holding the contact elements.

4. The device according to claim 1, **characterized in that** the holder (1) is mounted so as to be displaceable against the force of springs (25), and a switch (28, 28') that switches the power feed from the charging device is located in the sliding motion path.

## Revendications

1. Agencement pour charger la batterie de vélos électriques et véhicules électriques à deux roues similaires, avec un appareil de charge stationnaire dont les contacts de charge (15, 20, 27) disposés sur un support (1) doivent être reliés électriquement à des éléments de contact sur le véhicule électrique, **caractérisé en ce que** les éléments de contact sont disposés sur le moyeu d'une roue du véhicule électrique et **en ce que** les contacts de charge (15, 20, 27) sont disposés dans le support (1) sur le fond d'évidements (V) formés pour la mise en place des extrémités d'un moyeu, les contacts de charge (15, 20, 27) étant réalisés en tant que contacts élastiques.

2. Agencement selon la revendication 1, **caractérisé en ce que** des corps pivotants ou des corps coulissants (13) sont disposés dans les évidements (V) et **en ce qu'**un commutateur (16, 16') commutant l'alimentation en courant de l'appareil de charge est disposé sur le trajet du mouvement de coulissement ou de pivotement de ces corps (13).

3. Agencement selon la revendication 1, **caractérisé en ce que** les contacts de charge sont réalisés en tant que ressorts (20) sensiblement en forme de U pour réceptionner les éléments de contact.

4. Agencement selon la revendication 1, **caractérisé en ce que** le support (1) est monté de manière à pouvoir coulisser à l'encontre de la force de ressorts (25) et **en ce qu'**un commutateur (28, 28') commutant l'alimentation en courant de l'appareil de charge est disposé sur le trajet du mouvement de coulissement.
